(19) Europäisches Patentamt
European Patent Office
Office européen des brevets

(11) **EP 2 126 615 B1**

(12) **EUROPÄISCHE PATENTSCHRIFT**

(45) Veröffentlichungstag und Bekanntmachung des Hinweises auf die Patenterteilung:
**25.01.2017 Patentblatt 2017/04**

(21) Anmeldenummer: **08715761.6**

(22) Anmeldetag: **14.02.2008**

(51) Int Cl.:
*G02B 5/18* *(2006.01)*     *B42D 15/00* *(2006.01)*

(86) Internationale Anmeldenummer:
**PCT/EP2008/001120**

(87) Internationale Veröffentlichungsnummer:
**WO 2008/104277 (04.09.2008 Gazette 2008/36)**

(54) **GITTERBILD**

GRID IMAGE

IMAGE DE RÉSEAU DE DIFFRACTION

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **26.02.2007 DE 102007009646**

(43) Veröffentlichungstag der Anmeldung:
**02.12.2009 Patentblatt 2009/49**

(73) Patentinhaber: **Giesecke & Devrient GmbH**
**81677 München (DE)**

(72) Erfinder:
• **DICHTL, Marius**
**81371 München (DE)**
• **GERHARDT, Thomas**
**81539 München (DE)**

(56) Entgegenhaltungen:
WO-A-03/084765     WO-A-2005/071444
WO-A-2006/133863     DE-A1- 10 348 619

**Beschreibung**

Die Erfindung betrifft ein Gitterbild mit zwei oder mehr Gitterfeldern, die jeweils ein elektromagnetische Strahlung beeinflussendes Gittermuster aus einer Vielzahl von Strichgitterlinien enthalten. Die Erfindung betrifft ferner ein Verfahren zur Herstellung eines derartigen Gitterbilds, ein Sicherheitselement, ein Sicherheitspapier sowie ein Wertdokument mit einem solchen Gitterbild.

Es ist bekannt, Hologramme, holographische Gitterbilder und andere hologrammähnliche Beugungsstrukturen zur Echtheitsabsicherung von Kreditkarten, Wertdokumenten, Produktverpackungen und dergleichen einzusetzen. Derartige Beugungsstrukturen werden im Allgemeinen durch die Belichtung einer lichtempfindlichen Schicht mit überlagerter kohärenter Strahlung hergestellt. Echte Hologramme entstehen dabei, indem ein Objekt mit kohärentem Laserlicht beleuchtet wird und das von dem Objekt gestreute Laserlicht mit einem unbeeinflussten Referenzstrahl in der lichtempfindlichen Schicht überlagert wird.

Bestehen die in der lichtempfindlichen Schicht überlagerten Lichtstrahlen andererseits aus räumlich ausgedehnten, einheitlichen kohärenten Wellenfeldern, so entstehen bei der Überlagerung holographische Beugungsgitter. Die Einwirkung der überlagerten Wellenfelder auf die lichtempfindliche Schicht, wie etwa einen photographischen Film oder eine Photoresistschicht, erzeugt dort ein holographisches Beugungsgitter, das beispielsweise in Form heller und dunkler Linien in einem photographischen Film oder in Form von Bergen und Tälern in einer Photoresistschicht konserviert werden kann. Da die Lichtstrahlen in diesem Fall nicht durch ein Objekt gestreut werden, erzeugt das holographische Beugungsgitter lediglich einen optisch variablen Farbeindruck, jedoch keine Bilddarstellung.

Auf Grundlage von holographischen Beugungsgittern lassen sich holographische Gitterbilder erzeugen, indem nicht die gesamte Fläche des lichtempfindlichen Materials mit einem einheitlichen holographischen Beugungsgitter belegt wird, sondern indem geeignete Masken verwendet werden, um jeweils nur Teile der Aufnahmefläche mit einem von mehreren verschiedenen einheitlichen Gittermustern zu belegen. Ein solches holographisches Gitterbild setzt sich somit aus mehreren Gitterfeldern mit unterschiedlichen Beugungsgittermustern zusammen. Durch geeignete Anordnung der Gitterfelder lässt sich mit einem derartigen holographischen Gitterbild eine Vielzahl unterschiedlicher Bildmotive darstellen.

Die Beugungsgittermuster können nicht nur durch direkte oder indirekte optische Überlagerung kohärenter Laserstrahlen, sondern auch mittels Elektronenlithographie hergestellt werden. Häufig wird eine Musterbeugungsstruktur erzeugt, die anschließend in eine Reliefstruktur umgesetzt wird. Diese Reliefstruktur kann dann als Prägewerkzeug verwendet werden.

In der Druckschrift WO 2005/071444 A2 sind Gitterfelder mit Strichgitterlinien beschrieben, die durch die Parameter Orientierung, Krümmung, Beabstandung und Profilierung charakterisiert sind, wobei zumindest einer dieser Parameter über der Fläche des Gitterfelds variiert. Variiert zumindest einer der Parameter zufällig, so entstehen sogenannte Mattstrukturen, bei denen nicht diffraktive Effekte, sondern Streueffekte den visuellen Eindruck bei der Betrachtung dominieren. Diese Mattstrukturen weisen ein mattes, vorzugsweise keine Farbigkeit zeigendes Erscheinungsbild auf. Ist der visuelle Eindruck ausschließlich durch Streueffekte bestimmt, so weisen die Mattstrukturen aus allen Betrachtungswinkeln das gleiche Erscheinungsbild auf.

Ausgehend davon liegt der Erfindung die Aufgabe zugrunde, ein Gitterbild der eingangs genannten Art weiter zu verbessern und insbesondere unter Beibehaltung der bisherigen Vorteile Gitterbilder mit neuen optischen Effekten und/ oder mit erhöhter Fälschungssicherheit zu schaffen.

Diese Aufgabe wird durch das Gitterbild mit den Merkmalen des Hauptanspruchs gelöst. Ein Herstellungsverfahren, ein Sicherheitselement, ein Sicherheitspapier sowie ein Wertdokument mit einem solchen Gitterbild sind in den nebengeordneten Ansprüchen angegeben. Weiterbildungen der Erfindung sind Gegenstand der Unteransprüche.

Gemäß der Erfindung ist bei einem gattungsgemäßen Gitterbild zumindest ein Gitterfeld ein achromatisches Gitterfeld mit einem betrachtungswinkelabhängigen visuellen Erscheinungsbild. Die Gitterfelder sind dabei aus ineinander verschachtelten Teilbereichen gebildet, deren Ausdehnung in zumindest einer Dimension unterhalb der Auflösungsgrenze des bloßen Auges liegt.

Vorzugsweise weist das Gitterbild sogar zwei oder mehr achromatische Gitterfelder mit einem betrachtungswinkelabhängigen visuellen Erscheinungsbild auf. Die achromatischen Gitterfelder zeigen ein mattes, vorzugsweise silbrig mattes, nichtfarbiges Erscheinungsbild, das sich in Abhängigkeit vom Betrachtungswinkel verändert. Die Änderung kann dabei in einer Änderung der Helligkeit des Gitterfelds bestehen oder auch darin, dass das Gitterfeld unter bestimmten Betrachtungswinkeln sichtbar und unter anderen Betrachtungswinkeln nicht sichtbar ist.

Um ein betrachtungswinkelabhängiges Erscheinungsbild zu erzeugen weist jedes der achromatischen Gitterfelder mit Vorteil eine Vorzugsrichtung auf, die einen Betrachtungsbereich festlegt, aus dem das achromatische Gitterfeld mit einem matten, vorzugsweise silbrigen Erscheinungsbild visuell erkennbar ist. Der so festgelegte Betrachtungsbereich kann insbesondere durch einen Winkelbereich von etwa +/-10°, bevorzugt von etwa +/- 5°, besonders bevorzugt von etwa +/-3° um eine Vorzugsbetrachtungsrichtung gegeben sein.

Gemäß der Erfindung sind die Strichgitterlinien zumindest eines achromatischen Gitterfelds durch die Parameter Orientierung, Krümmung, Beabstandung und Profilierung charakterisiert, wobei zumindest einer dieser Parameter über die Fläche des Gitterfelds zufällig, vorzugsweise zufällig und sprunghaft variiert. Dabei kann insbesondere vorgesehen sein, dass der Parameter Orientierung der Strichgitterlinien in einem Winkelbereich von weniger als +/-10°, bevorzugt von weniger als +/- 5°, besonders bevorzugt von weniger als +/-3° zufällig, vorzugsweise zufällig und sprunghaft variiert. In einer weiteren vorteilhaften Ausgestaltung variiert nur der Parameter Beabstandung der Strichgitterlinien über der Fläche des Gitterfelds zufällig.

Im Rahmen der vorliegenden Beschreibung wird unter Beugung oder Diffraktion die Abweichung von der geradlinigen Ausbreitung des Lichts verstanden, die nicht durch Brechung, Reflexion oder Streuung hervorgerufen wird, sondern die auftritt, wenn Licht auf Hindernisse, wie Spalte, Blenden, Kanten oder dergleichen, trifft. Beugung ist eine typische Wellenerscheinung und daher stark wellenlängenabhängig und stets mit Interferenz verbunden. Sie ist insbesondere von den Vorgängen der Reflexion und der Brechung zu unterscheiden, die sich bereits mit dem Bild geometrischer Lichtstrahlen zutreffend beschreiben lassen. Hat man es mit Beugung an sehr vielen, statistisch verteilten Objekten zu tun, hat es sich eingebürgert, statt von Beugung an unregelmäßig verteilten Objekten von Streuung zu sprechen.

Unter Streuung versteht man die Ablenkung eines Teils einer gebündelten Wellenstrahlung aus seiner ursprünglichen Richtung beim Durchgang durch Materie aufgrund der Wechselwirkung mit einem oder mehreren Streuzentren. Die diffus in alle Raumrichtungen gestreute Strahlung bzw. die Gesamtheit der von den Streuzentren ausgehenden Streuwellen geht der primären Strahlung verloren. Streuung von Licht an Objekten mit einer Größenordnung im Bereich der Lichtwellenlänge und darunter ist in der Regel ebenfalls wellenlängenabhängig, wie beispielsweise die Rayleigh-Streuung oder die Mie-Streuung. Ab einer Objektgröße, die die zehnfache Wellenlänge überschreitet, spricht man gewöhnlich von nichtselektiver Streuung, bei der alle Wellenlängen in etwa gleich beeinflusst werden.

Nichtselektive Streuung kann jedoch auch mit kleineren Objekten erreicht werden, wenn die Objekte nur eine unregelmäßige Verteilung und eine geeignete Bandbreite von Objektgrößen aufweisen, da sich dann die wellenlängenabhängigen Eigenschaften der einzelnen Objekte über das gesamte Ensemble herausmitteln.

Wenn, wie weiter unten genauer erläutert, zumindest einer der charakteristischen Parameter der erfindungsgemäßen Gittermuster eine zufällige Variation aufweist und die Gittermuster zugleich einen gewissen Ordnungsgrad aufweisen, so treten gleichzeitig sowohl Effekte, die gewöhnlich mit Beugungsvorgängen, als auch Effekte, die gewöhnlich mit Streuvorgängen beschrieben werden, auf.

Eine zufällige Variation und eine gleichzeitig vorliegende Ordnung kann beispielsweise dadurch erreicht werden, dass sich die zufällige Variation eines Parameters auf einen begrenzten Wertebereich beschränkt. So kann etwa der Parameter Orientierung der Gitterlinien nur in einem begrenzten Winkelbereich um eine ausgezeichnete Richtung zufällig variieren und damit eine zufällige Orientierung mit dem Erhalt einer Vorzugsrichtung in der Gitterstruktur kombinieren. Nach einer weiteren Möglichkeit wird die zufällige Variation eines Parameters mit der der Konstanz eines anderen Parameters verbunden. Beispielsweise kann der Abstand benachbarter Gitterlinien bei konstanter Orientierung zufällig variieren, so dass eine vorgegebene Unordnung im Parameter Beabstandung mit Ordnung im Parameter Orientierung verbunden und damit eine Vorzugsrichtung bei der Streuung erreicht wird.

Der relative Anteil der Beugungseffekte bzw. Streueffekte hängt jeweils von dem Ausmaß der zufälligen Variation ab. Je größer die Unordnung im Gitterfeld, desto größer der Streueffektanteil. Derartige Gittermuster, die sowohl Beugungs- als auch Streueffekte aufweisen, werden im Rahmen dieser Beschreibung allgemein als elektromagnetische Strahlung beeinflussende Gittermuster bezeichnet.

Eine zufällige Variation eines der genannten Parameter kann auf verschiedene Weise erreicht werden. Beispielsweise kann der Abstand aufeinanderfolgender paralleler Gitterlinien eines Gittermusters durch eine Beziehung der Art

$$\mathrm{dadjacent} = \mathrm{dmin} + (\mathrm{dmax} - \mathrm{dmin}) * \mathrm{Rand}()$$

gegeben sein, wobei dmin und dmax den minimalen bzw. maximalen Gitterlinienabstand und Rand() eine Zufallszahl oder geeignet erzeugte Pseudozufallszahl aus dem Intervall [0,1] darstellen. Der Abstand der Gitterlinien springt dann von Gitterlinie zu Gitterlinie willkürlich mit zufälligen Werten aus dem Intervall [dmin, dmax].

Eine andere Möglichkeit, eine zufällige Variation des Abstands zu erreichen besteht darin, bei der Herstellung mehrere Gittermuster gleicher Orientierung aber mit verschiedenen Gitterkonstanten übereinander zu belichten. Der Abstand der Gitterlinien der entstehenden Gitterstruktur springt dann von Gitterlinie zu Gitterlinie ebenfalls in für praktische Belange ausreichend zufälliger Art.

In einer vorteilhaften Weiterbildung der Erfindung ist das Gitterbild zusätzlich mit zumindest einem diffraktiven Gitterfeld mit einem betrachtungswinkelabhängigen Erscheinungsbild ausgestattet. Die diffraktiven Gitterfelder können beispielsweise lineare Gitter, Subwellenlängengitter, Mottenaugenstrukturen oder dergleichen enthalten. Vorzugsweise handelt es sich bei den Gittermustern der diffraktiven Gitterfelder um Sinusgitter.

Die ineinander verschachtelten Teilbereiche der Gitterfelder sind mit Vorteil als schmale Streifen mit einer Breite unterhalb der Auflösungsgrenze des bloßen Auges ausgebildet. Die Streifenbreite beträgt dabei insbesondere zwischen 1 μm und 30 μm, vorzugsweise zwischen 10 μm und 25 μm und besonders bevorzugt etwa 20 μm.

Die Streifen eines Gitterfelds weisen vorzugsweise alle dieselbe Breite auf. Es ist jedoch auch denkbar, die Streifen mit verschiedenen Breiten auszubilden oder sogar mit einer innerhalb eines Streifens variierenden Breite.

Die Verschachtelung der Streifen mehrerer Gitterfelder kann am einfachsten durch eine alternierende Abfolge der zu den verschiedenen Gitterfeldern gehörenden Streifen erreicht werden, also beispielsweise durch eine Streifenfolge der Art ABABAB.... bei zwei Gitterfeldern mit Streifen A und B.

In einer alternativen Ausgestaltung sind die Teilbereiche als kleine Flächenelemente beliebiger Form mit einer Größe unterhalb der Auflösungsgrenze des Auges ausgebildet. Auch hier kann die Verschachtelung am einfachsten durch eine alternierende Anordnung der Flächenelemente erreicht werden. Sind beispielsweise als Flächenelemente kleine Quadrate vorgesehen, so können sich Zeilen mit der Flächenelementabfolge ABABAB ... mit Zeilen mit der versetzten Abfolge BABABA... abwechseln. Entsprechende Anordnungen sind dem Fachmann auch für andere Formen bekannt.

In einer Weiterbildung der Erfindung sind die Teilbereiche zumindest eines achromatischen Gitterfelds zur Erhöhung der Mattstrukturwirkung in zwei oder mehr Subbereiche unterteilt, wobei die Strichgitterlinien in jedem Subbereich parallel, aber mit unterschiedlichen, zufällig und sprunghaft variierenden Abständen zwischen benachbarten Strichgitterlinien angeordnet sind. Die relative Orientierung der Gitterlinien in den Subbereichen kann dabei gleich oder verschieden sein. Beispielsweise können im Fall schmaler Streifen die Streifen in n Substreifensysteme mit n>=2 unterteilt sein, wobei die Substreifen jeweils mit Gittermustern gleicher Orientierung aber unterschiedlicher Belegungsdichte gefüllt sind.

Die achromatischen Gitterfelder des Gitterbilds können beispielsweise ein Bildmotiv, wie etwa ein Portrait bilden. Insbesondere können die achromatischen Gitterfelder durch unterschiedliche Belegungsdichten mit Strichgitterlinien ein Halbtonbild mit mehreren Helligkeitsstufen bilden. Über die Dichte der Belegung eines achromatischen Gitterfelds mit Gitterlinien lässt sich dessen Helligkeit nach Wunsch einstellen. Je nachdem, wie stark die Gitterlinien eine bestimmte Fläche ausfüllen, entsteht bei der Betrachtung ein hellerer oder dunklerer matter Eindruck. Dabei zeigt eine weniger stark mit Gitterlinien gefüllte Fläche einen weniger stark ausgeprägten Mattstruktureffekt, so dass die Fläche für einen Betrachter dunkler erscheint als eine stärker mit Gitterlinien gefüllte Fläche.

Weist das Gitterbild zumindest ein diffraktives Gitterfeld auf, so kann dieses insbesondere eine Symbolgraphik, wie etwa eine alphanumerische Zeichenfolge, ein Logo oder abstrakte geometrische Formen bilden. Die achromatischen Gitterfelder und/ oder die diffraktiven Gitterfelder können auch ein oder mehrere aufeinander abgestimmte Bildmotive bilden. Insbesondere die Kombination eines Mattstruktur-Halbtonbilds, wie etwa eines Portraits, mit einer farbigen diffraktiven Symbolgrafik ist für einen Betrachter sehr auffällig und einprägsam und weist daher einen hohen Sicherheitswert auf.

Nach einer vorteilhaften Erfindungsvariante enthält das Gitterbild ein Wechselbild, also ein Bild, das unter unterschiedlichen seitlichen Kippwinkeln unterschiedliche Bilder zeigt, so dass für den Betrachter beim seitlichen Kippen des Gitterbildes ein Wechselbild entsteht. Dieses Wechselbild kann insbesondere von dem oder den achromatischen Gitterfeldern verwirklicht sein.

In einer anderen ebenfalls vorteilhaften Variante enthält das Gitterbild ein Bewegungsbild, also ein Bild, das unter unterschiedlichen seitlichen Kippwinkeln ein Bildmotiv in unterschiedlichen Bewegungszuständen zeigt, so dass für den Betrachter beim seitlichen Kippen des Gitterbildes ein Bewegungsbild entsteht. Nach einer weiteren vorteilhaften Variante enthält das Gitterbild ein Pumpbild, also ein Bild, das unter unterschiedlichen seitlichen Kippwinkeln eine sich vergrößernde oder verkleinernde Umrisslinie eines Bildmotivs zeigt, so dass für den Betrachter beim seitlichen Kippen des Gitterbildes ein Pumpbild entsteht.

Eine weitere bevorzugte Erfindungsvariante betrifft ein Gitterbild, das ein Stereobild enthält, also ein Bild, das zumindest zwei Ansichten eines Bildmotivs aus unterschiedlichen Betrachtungsrichtungen zeigt und bei dem die seitlichen Kippwinkel der Ansichten auf Grundlage eines vorgewählten Betrachtungsabstands für das Gitterbild so festgesetzt sind, dass für den Betrachter ein Stereobild des Bildmotivs entsteht. Dabei kann das Gitterbild insbesondere mehrere Ansichten des Bildmotivs aus unterschiedlichen Betrachtungsrichtungen zeigen, wobei die seitlichen Kippwinkel der Ansichten so festgelegt sind, dass für den Betrachter beim seitlichen Kippen des Gitterbildes eine räumliche Ansicht des Bildmotivs entsteht. Einen Spezialfall des Stereobilds stellt das Kulissenbild dar, bei dem zumindest zwei Ansichten eines Kulissenmotivs gezeigt sind, in welchem mehrere ebene Objekte kulissenartig hintereinander angeordnet sind. Auch das Bewegungsbild, Pumpbild und Stereobild wird mit Vorteil jeweils von dem oder den achromatischen Gitterfeldern verwirklicht.

Details zur Teilbereichs-Zerlegung der Gitterfelder von Wechselbildern, Bewegungsbildern, Pumpbildern und Stereobildern sowie das grundsätzliche Vorgehen bei der geeigneten Belegung mit Gittermustern können der Druckschrift DE 103 48 619 A1 entnommen werden, deren Offenbarung insoweit in die vorliegende Beschreibung aufgenommen wird.

Die Gittermuster der achromatischen Gitterfelder und/ oder der diffraktiven Gitterfelder sind vorzugsweise elektronenstrahllithographisch erzeugt. Diese Technik ermöglicht es, Gitterbilder herzustellen, bei denen jede einzelne Gitterlinie durch die Parameter Orientierung, Krümmung, Beabstandung und Profilierung eindeutig bestimmt werden kann.

Es hat sich als zweckmäßig herausgestellt, wenn die Strichgitterlinien eine Linienprofiltiefe zwischen etwa 100 nm und etwa 400 nm aufweisen. Das Verhältnis von Linienbreite zur Gitterkonstante in den achromatischen Gitterfeldern und/oder den diffraktiven Gitterfeldern beträgt vorteilhaft etwa 1:2. Die Strichgitterlinien in den achromatischen Gitterfeldern und/oder den diffraktiven Gitterfeldern weisen mit Vorteil ein sinoidales Profil auf. Der Bereich der Gitterlinienabstände liegt vorzugsweise zwischen etwa 0,1 $\mu$m und etwa 10 $\mu$m, vorzugsweise zwischen 0,5 $\mu$m und 1,5 $\mu$m. Bei der zufälligen Variation der Abstände können selbstverständlich teilweise auch sehr kleine Gitterlinienabstände auftreten.

Das Gitterbild selbst ist vorzugsweise mit einem reflektierenden oder hochbrechenden Material beschichtet. Als reflektierende Materialien kommen alle Metalle und viele Metalllegierungen in Betracht. Beispiele für geeignete hochbrechende Materialien sind $CaS$, $CrO_2$, $ZnS$, $TiO_2$ oder $SiO_x$. Vorteilhaft besteht ein signifikanter Unterschied in den Brechungsindizes des Mediums, in das das Gitterbild eingebracht ist, und des hochbrechenden Materials, vorzugsweise ist die Differenz sogar größer als 0,5. Das Gitterbild kann in eingebetteter oder nicht eingebetteter Ausgestaltung erzeugt werden. Zur Einbettung eignen sich beispielsweise PVC, PET, Polyester oder eine UV-Lackschicht.

Die Erfindung umfasst auch Verfahren zum Herstellen von Gitterbildern, sowie ein Sicherheitselement mit einem Gitterbild der oben beschriebenen Art. Das Sicherheitselement kann insbesondere ein Sicherheitsfaden, ein Etikett oder ein Transferelement sein. Die Erfindung umfasst ferner ein Sicherheitspapier mit einem solchen Sicherheitselement sowie ein Wertdokument, das mit einem Gitterbild, einem Sicherheitselement oder einem Sicherheitspapier der beschriebenen Art ausgestattet ist. Bei dem Wertdokument kann es sich insbesondere um eine Banknote, einen Pass, eine Banderole, eine Urkunde oder eine Ausweiskarte handeln. Es versteht sich, dass das beschriebene Sicherheitselement, Sicherheitspapier oder Wertdokument zur Absicherung von Gegenständen beliebiger Art eingesetzt werden kann.

Selbstverständlich lassen sich die erfindungsgemäßen Gitterbilder mit weiteren visuellen und/oder maschinenlesbaren Sicherheitsmerkmalen kombinieren. So kann das Gitterbild beispielsweise mit weiteren Funktionsschichten, wie etwa polarisierenden, phasenschiebenden, leitfähigen, magnetischen oder lumineszierenden Schichten, ausgestattet werden.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:

Fig.1      eine schematische Darstellung einer Banknote mit einem erfindungsgemäßen Sicherheitselement,

Fig. 2      eine detailliertere Aufsicht auf das Sicherheitselement der Fig.1,

Fig. 3      in (a) bis (d) vergrößerte Ausschnitte von Gitterbildern nach verschiedenen Ausführungsbeispielen der Erfindung, und

Fig. 4      in (a) einen vergrößerten Ausschnitt eines komplexen Gitterbilds wie in Fig. 2 und in (b) eine Abwandlung des Ausführungsbeispiels von (a), und

Fig. 5      eine Aufsicht auf ein Sicherheitselement nach einem weiteren Ausführungsbeispiel der Erfindung.

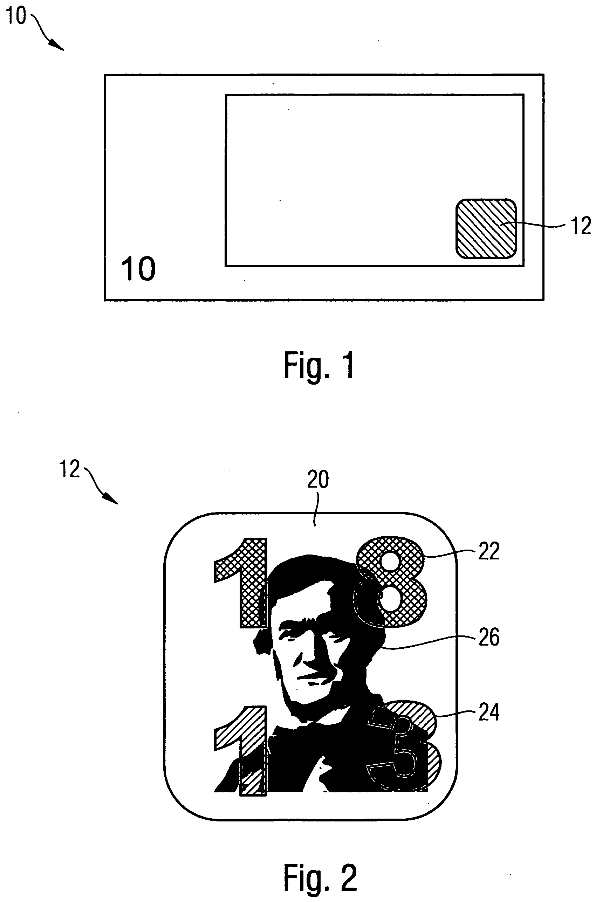

Die Erfindung wird nun am Beispiel einer Banknote erläutert. Fig. 1 zeigt dazu eine schematische Darstellung einer Banknote 10, die ein erfindungsgemäßes Sicherheitselement in Form eines aufgeklebten Transferelements 12 aufweist.

Es versteht sich, dass die Erfindung nicht auf Transferelemente und Banknoten beschränkt ist, sondern überall eingesetzt werden kann, wo Gitterbilder zur Anwendung kommen können, beispielsweise bei Uhrenzifferblättern und Modeschmuck, bei Etiketten auf Waren und Verpackungen, bei Sicherheitselementen auf Dokumenten, Ausweisen, Pässen, Kreditkarten, Gesundheitskarten usw. Bei Banknoten und ähnlichen Dokumenten kommen beispielsweise außer Transferelementen auch Sicherheitsfäden und außer Aufsichtselementen auch Durchsichtselemente, wie Durchsichtsfenster, zur Ausstattung mit Gitterbildern infrage.

Wie in der detaillierteren Aufsicht auf das Sicherheitselement 12 der Fig. 2 dargestellt, enthält das Sicherheitselement 12 ein Flip-Bild in Form eines Gitterbilds 20 mit mehreren Gitterfeldern 22, 24, 26, die dem Betrachter ein betrachtungswinkelabhängiges und dazu farblich unterschiedliches visuelles Erscheinungsbild bieten.

Alle drei Gitterfelder 22, 24, 26 enthalten ein elektromagnetische Strahlung beeinflussendes Gittermuster aus einer Vielzahl von Strichgitterlinien, die jeweils durch die Parameter Orientierung, Krümmung, Beabstandung und Profilierung charakterisiert sind. Das unterschiedliche visuelle Erscheinungsbild der Gitterfelder wird durch eine unterschiedlich geordnete bzw. gezielt ungeordnete Anordnung der Strichgitterlinien erreicht.

Die Gitterfelder 22 und 24, die im Ausführungsbeispiel der Fig. 2 die Ziffernfolgen "18" bzw. "13" bilden, stellen diffraktive Gitterfelder mit regelmäßigen Gittermustern dar, bei denen die Strichgitterlinien innerhalb der Gitterfelder 22 bzw. 24 jeweils gleiche charakteristische Parameter aufweisen. Abhängig von dem gewählten Abstand der Gitterlinien und der Winkelorientierung der Gittermuster zeigen die Gitterfelder 22, 24 ein betrachtungswinkelabhängiges und farbiges Erscheinungsbild.

Die in Fig. 2 dargestellten Gitterfelder 22 und 24 sind mit Gittermustern mit unterschiedlichen Gitterkonstanten, aber gleicher Winkelorientierung gefüllt, so dass die Gitterfelder 22, 24 aus dem gleichen Betrachtungswinkel, aber mit unterschiedlichem Farbeindruck sichtbar sind. Beispielsweise kann das Gitterfeld 22 bei schräger Betrachtung von links Rot, das Gitterfeld 24 aus derselben Betrachtungsrichtung Grün aufleuchten.

Das Gitterfeld 26 stellt dagegen ein achromatisches Gitterfeld dar, das zwar ebenfalls ein betrachtungswinkelabhängiges, jedoch nichtfarbiges, sondern silbrig mattes Erscheinungsbild zeigt. Ein Gitterfeld mit einer derartigen Mattstruktur kann ein Schwarz-Weiß-Bild mit zwei Helligkeitsstufen sein oder durch bereichsweise unterschiedliche Helligkeiten auch ein silbrig mattes Halbtonbild darstellen. Das in Fig. 2 dargestellte Gitterfeld 26 zeigt zur Illustration ein Portrait aus einem Halbtonbild mit drei Helligkeitsstufen.

Ähnlich wie die diffraktiven Gitterfelder 22, 24 weist das achromatische Gitterfeld 26 eine Vorzugsrichtung auf, die einen Betrachtungsbereich festlegt, aus dem das achromatische Gitterfeld mit seinem silbrig-matten Erscheinungsbild erkennbar ist. Beispielsweise kann das Gitterfeld 26 nur bei schräger Betrachtung von rechts sichtbar sein. Die Gitterfelder 22, 24, 26 der Fig. 2 sind daher in der Realität nicht gleichzeitig sichtbar, vielmehr wechselt das visuelle Erscheinungsbild des Gitterbilds beim Kippen oder Drehen des Sicherheitselements zwischen der farbigen Symboldarstellung der diffraktiven Gitterfelder 22, 24 und der nichtfarbigen Portraitdarstellung des achromatischen Gitterfelds 26.

Das betrachtungswinkelabhängige, nichtfarbige Erscheinungsbild des Gitterfelds 26 wird dabei durch eine gezielt eingebrachte Unordnung in den enthaltenen Gittermustern erreicht, wie weiter unten genauer erläutert.

Um die von dem Gitterfeld 26 gebildete Mattstruktur und die von den Gitterfeldern 22 und 24 gebildeten Beugungsstrukturen im selben Flächenbereich des Gitterbilds 20 unterbringen zu können, sind die Gitterfelder 22, 24, 26 jeweils aus eine Vielzahl kleiner, in der Fläche des Gitterbilds 20 ineinander verschachtelter Teilbereiche gebildet. Die Ausdehnung dieser Teilbereiche liegt dabei in zumindest einer Dimension unterhalb der Auflösungsgrenze des bloßen Auges, so dass die Aufteilung für den Betrachter nicht in Erscheinung tritt.

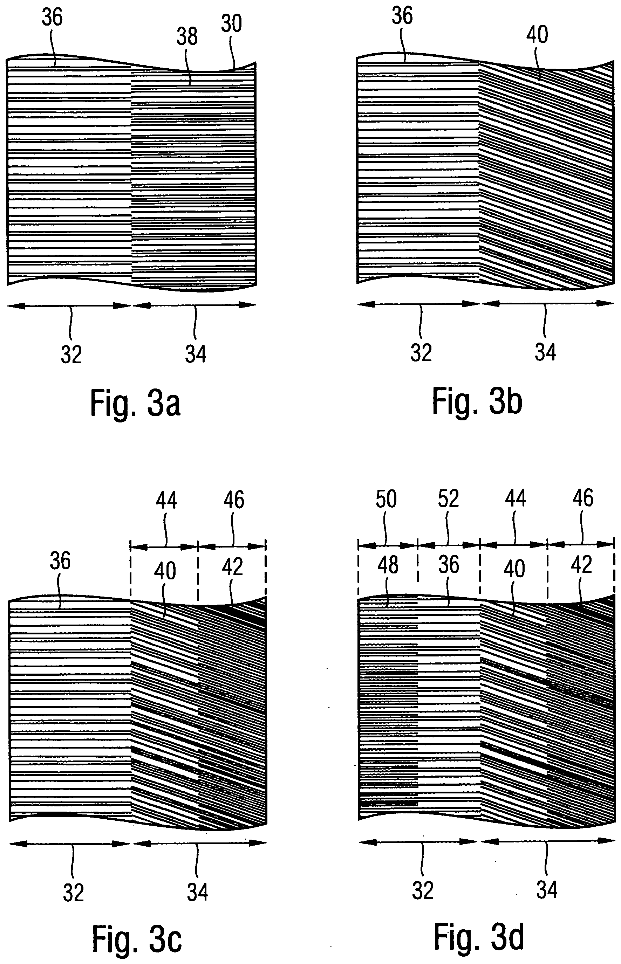

Zur Illustration des erfindungsgemäßen Prinzips zeigt Fig. 3(a) einen vergrößerten Ausschnitt eines einfachen Gitterbilds 30 mit zwei achromatischen Gitterfeldern, die aus einer bestimmten Betrachtungsrichtung mit unterschiedlicher Helligkeit sichtbar sind. Die beiden achromatischen Gitterfelder bestehen dabei jeweils aus einer Vielzahl alternierend angeordneter schmaler Streifen 32 bzw. 34, die eine Breite von nur etwa 20 $\mu$m aufweisen, so dass die Aufteilung und die Verschachtelung mit bloßem Auge nicht aufgelöst werden kann.

Die in die beiden Streifen eingeschriebenen Gittermuster 36 und 38 sind jeweils im gleichen Azimutwinkel orientiert und mit einer willkürlich zufälligen Beabstandung der Gitterlinien ausgeführt. Eine solche willkürlich zufällige Beabstandung kann beispielsweise durch aufeinanderfolgendes Belichten mehrerer Gitter gleicher Orientierung, aber unterschiedlicher Gitterkonstanten erhalten werden. Durch eine solche Gestaltung mit zufälligem Abstand benachbarter Gitterlinien entsteht eine achromatisch streuende Gitterstruktur mit silbrig-mattem Erscheinungsbild. Gleichzeitig weist die Gitterstruktur aufgrund der parallelen Gitterlinien eine Vorzugsrichtung für die Streuung auf und erzeugt so insgesamt ein betrachtungswinkelabhängiges, nichtfarbiges visuelles Erscheinungsbild.

Das Gittermuster 38 weist eine höhere Belegungsdichte mit Gitterlinien auf und erzeugt für den Betrachter damit eine hellere Fläche als das mit geringerer Belegungsdichte ausgebildete Gittermuster 36. Auf diese Weise wird durch die Gestaltung der Fig. 3(a) ein Gitterbild mit zwei silbrig-matten Gitterfeldern unterschiedlicher Helligkeit erzeugt, die beide aus demselben Betrachtungsbereich sichtbar sind.

Bei der in Fig. 3(b) gezeigten alternativen Gestaltung ist das Gittermuster 36 der Streifen 32 wie bei der Gestaltung der Fig. 3(a) ausgeführt, während das Gittermuster 40 der Streifen 34 eine andere azimutale Ausrichtung der Gitterlinien aufweist. Die beiden silbrig matten Gitterfelder erscheinen daher bei Betrachtung nicht nur unterschiedlich hell, sondern sind auch aus unterschiedlichen Betrachtungsrichtungen sichtbar.

Fig. 3(c) zeigt eine Detailaufsicht auf eine weitere Ausführungsform, bei der das Gittermuster 36 der Streifen 32 wiederum wie bei der Gestaltung der Fig. 3(a) ausgeführt ist. Zur Verstärkung der Mattstrukturwirkung ist in die Streifen 34 neben dem Gittermuster 40 partiell ein weiteres Gittermuster 42 eingeschrieben, so dass die Streifen 34 in zwei Substreifensysteme 44, 46 unterteilt werden. Es versteht sich, dass die Streifen eines Gitterfelds auch in mehr als zwei Substreifensysteme unterteilt werden können, in die jeweils Gitter, wie in Fig. 3(c) gezeigt, mit Substreifenbreite und unterschiedlichen oder gleichen Orientierungen und unterschiedlichen, willkürlich zufälligen Gitterabständen eingeschrieben werden.

In der Variante der Fig. 3(d) sind die Streifen 34 wie bei der Ausgestaltung der Fig. 3(c) ausgebildet, zusätzlich ist in die Streifen 32 neben dem Gittermuster 36 partiell ein weiteres Gittermuster 48 eingeschrieben, so das auch die Streifen 32 zur Verstärkung der Mattstrukturwirkung in zwei Substreifensysteme 50, 52 unterteilt sind.

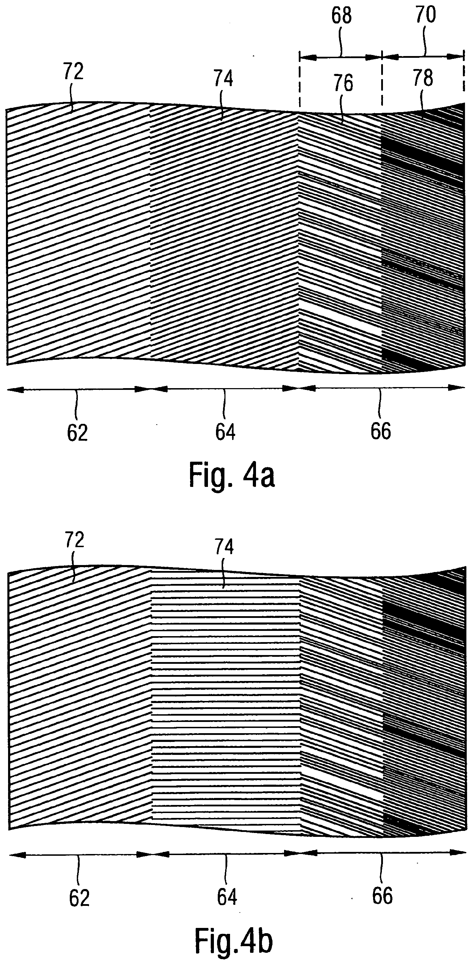

Um ein komplexeres Gitterbild zu erzeugen, bei dem achromatische und diffraktive Gitterfelder kombiniert sind, wie etwa bei dem Ausführungsbeispiel der Fig. 2, kann eine Gestaltung der in Fig. 4 dargestellten Art eingesetzt werden.

Fig. 4(a) zeigt einen vergrößerten Ausschnitt eines Gitterbilds mit zwei diffraktiven Gitterfeldern und einem achromatischen Gitterfeld. Die Gitterfelder sind jeweils in eine Vielzahl alternierend angeordneter schmaler Streifen 62, 64 und 66 unterteilt, die im Ausführungsbeispiel eine Breite von nur etwa 30 μm aufweisen, so dass Aufteilung und Verschachtelung im selben Flächenbereich für das bloße Auge nicht erkennbar sind.

Die Streifen 62 und 64 sind jeweils mit reinen Beugungsgittern 72, 74, also mit Strichgittern gleichartiger, paralleler Gitterlinien mit konstantem Abstand belegt. Abhängig von den gewählten Gitterkonstanten leuchten die Gitterfelder in einer gewünschten Farbe, beispielsweise das Gitterfeld der Streifen 62 rot und das Gitterfeld der Streifen 64 grün. Die übereinstimmende Azimutausrichtung der Gitterlinien der Streifen 62, 64 führt dazu, dass die beiden diffraktiven Gitterfelder aus derselben Betrachtungsrichtung sichtbar sind.

Die Streifen 66 des achromatischen Gitterfelds sind, wie oben beschrieben zur Verstärkung der Mattstrukturwirkung in zwei Substreifensysteme 68, 70 unterteilt und die Substreifen jeweils mit im gleichen Azimutwinkel orientierten, willkürlich zufälligen beabstandeten Gitterlinien 76, 78 gefüllt. Das Gitterfeld 26 erscheint somit aus dem vorbestimmten Betrachtungsbereich mit einem silbrig-matten Erscheinungsbild.

Es versteht sich, dass weitere achromatische oder diffraktive Gitterfelder vorgesehen sein können und dass die Betrachtungsrichtungen für die Gitterfelder nach Wunsch gewählt werden können. Beispielsweise zeigt Fig. 4(b) eine Abwandlung des Ausführungsbeispiels von Fig. 4(a), bei dem das Gittermuster 74 der zweiten diffraktiven Streifen 64 eine andere azimutale Orientierung als das Gittermuster 72 der ersten diffraktiven Streifen 62 aufweist, so dass die zugehörigen Gitterfelder aus unterschiedlichen Richtungen sichtbar sind.

Das oben mit Bezug auf Fig. 2 erläuterte Gitterbild stellt ein einfaches Flip-Bild bzw. Wechselbild dar, das dem Betrachter aus zwei unterschiedlichen seitlichen Betrachtungsrichtungen unterschiedliche Bilder zeigt, nämlich aus einem Betrachtungswinkel die farbigen Symboldarstellungen "18" und "13" der Gitterfelder 22 und 24 und aus einem anderen Betrachtungswinkel das silbrig-matte Portrait des achromatischen Gitterfelds 26.

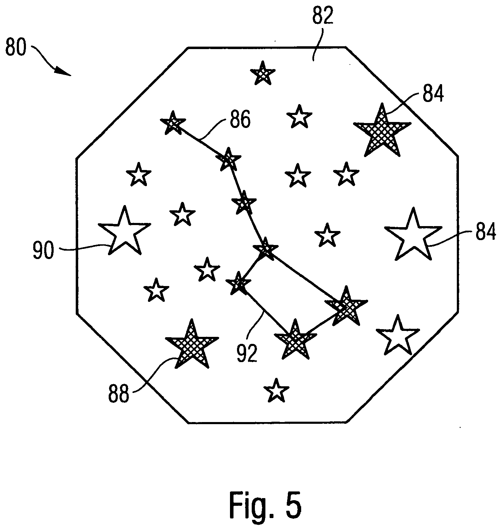

Mit den erfindungsgemäßen Gitterbildern können neben solchen Flip- oder Wechselbildern jedoch auch komplexere optische Effekte verwirklicht werden, wie etwa Stereobilder, Bewegungsbilder, Pumpbilder und dergleichen. Ein Ausführungsbeispiel eines Kulissenbilds, bei dem mehrere ebene Objekte kulissenartig hintereinander angeordnet sind und das einen Spezialfall eines Stereobilds darstellt, wird nunmehr mit Bezug auf Fig. 5 erläutert.

Fig. 5 zeigt eine Aufsicht auf ein Sicherheitselement 80, das ein Kulissen-Gitterbild 82 mit zwei Gitterfeldern 84 und 86 enthält, wobei das Gitterfeld 84 als achromatisches Gitterfeld und das Gitterfeld 86 als diffraktives Gitterfeld ausgebildet ist. Das Gitterfeld 84 stellt jeweils aus einem bestimmten Betrachtungsbereich erkennbare, silbrig-matt leuchtende Sterne dar, wobei ein Teil 88 der Sterne (in der Figur schraffiert) für den Betrachter im Vordergrund, ein anderer Teil 90 der Sterne (in der Figur nicht gefüllt) im Hintergrund zu schweben scheinen, so dass sich ein räumlicher Bildeindruck ergibt. Zusätzlich sind aus einer vorbestimmten Betrachtungsrichtung die vom diffraktiven Gitterfeld 86 erzeugten Sternbildlinien des Sternbilds "Großer Wagen" 92 farbig, im Ausführungsbeispiel blau leuchtend zu erkennen.

Um einen derartigen visuellen Eindruck zu erzeugen, sind die Gitterfelder 84 und 86 jeweils aus einer Vielzahl schmaler, ineinander verschachtelter Streifen mit einer Breite unterhalb der Auflösungsgrenze des Auges, beispielsweise einer Breite von 15 μm gebildet, wie bereits oben erläutert. Für den räumlichen Bildeindruck des Sternenhimmels 88, 90 werden zwei Ansichten des Sternenhimmels aus sich etwa um 15° unterscheidenden Betrachtungswinkeln verwendet. Diese Winkeldifferenz entspricht etwa dem Winkel zwischen rechtem und linken Auge eines Betrachters bei einem Betrachtungsabstand von 25 cm. Soll das Sicherheitselement 80 für einen anderen Betrachtungsabstand ausgelegt werden, kann die Winkeldifferenz entsprechend angepasst werden. Jedoch ist gerade bei Kulissenbildern, die nur eine begrenzte Anzahl von in die Tiefe gestaffelten Bildelementen aufweisen, der tatsächliche Betrachtungsabstand nicht kritisch für den räumlichen Bildeindruck.

Das achromatische Gitterfeld 84 wird somit in zwei Streifentypen zerlegt, einen ersten Streifentyp mit einem Gittermuster für das rechte Auge und einen zweiten Streifentyp mit einem Gittermuster für das linke Auge. Die Sternbildlinien 92 des diffraktiven Gitterfelds 88 sollen dagegen im Ausführungsbeispiel der Fig. 5 nicht räumlich erscheinen, so dass dieses Gitterfeld in nur eine Streifensorte zerlegt wird. Die durch diese Zerlegung entstandenen drei Streifensorten werden verschachtelt, beispielsweise alternierend angeordnet, und erzeugen zusammen den beschriebenen visuellen Bildeindruck.

Weitere Details zur Teilbereichs-Zerlegung von Gitterfeldern und dem grundsätzlichen Vorgehen bei der Belegung der Teilbereiche mit Gittermustern können der Druckschrift DE 103 48 619 A1 entnommen werden.

**Patentansprüche**

1. Gitterbild mit zwei oder mehr Gitterfeldern, die jeweils ein elektromagnetische Strahlung beeinflussendes Gittermuster aus einer Vielzahl von Strichgitterlinienenthalten, wobei die Strichgitterlinien zumindest eines achromatischen Gitterfelds durch die Parameter Orientierung, Krümmung, Beabstandung und Profilierung charakterisiert sind, wobei zumindest einer dieser Parameter über die Fläche des Gitterfelds zufällig, vorzugsweise zufällig und sprunghaft variiert,

   - die Gitterfelder aus ineinander verschachtelten Teilbereichen gebildet sind, deren Ausdehnung in zumindest einer Dimension unterhalb der Auflösungsgrenze des bloßen Auges liegt, **dadurch gekennzeichnet, dass**
   - zumindest ein Gitterfeld ein achromatisches Gitterfeld mit einem betrachtungswinkelabhängigen visuellen Erscheinungsbild ist.

2. Gitterbild nach Anspruch 1, **dadurch gekennzeichnet, dass** das Gitterbild zwei oder mehr achromatische Gitterfelder mit einem betrachtungswinkelabhängigen visuellen Erscheinungsbild aufweist.

3. Gitterbild nach Anspruch 1 oder 2, **dadurch gekennzeichnet, dass** jedes achromatische Gitterfeld eine Vorzugsrichtung aufweist, die einen Betrachtungsbereich festlegt, aus dem das achromatische Gitterfeld mit einem matten, vorzugsweise silbrigen Erscheinungsbild visuell erkennbar ist.

4. Gitterbild nach Anspruch 3, **dadurch gekennzeichnet, dass** der Betrachtungsbereich durch einen Winkelbereich von etwa +/-10°, bevorzugt von etwa +/- 5°, besonders bevorzugt von etwa +/-3° um eine Vorzugsbetrachtungsrichtung gegeben ist.

5. Gitterbild nach wenigstens einem der Ansprüche 1 bis 4, **dadurch gekennzeichnet, dass** der Parameter Orientierung der Strichgitterlinien in einem Winkelbereich von weniger als +/-10°, bevorzugt von weniger als +/- 5°, besonders bevorzugt von weniger als +/-3° zufällig, vorzugsweise zufällig und sprunghaft variiert.

6. Gitterbild nach wenigstens einem der Ansprüche 1 bis 4, **dadurch gekennzeichnet, dass** nur der Parameter Beabstandung der Strichgitterlinien über die Fläche des Gitterfelds zufällig, vorzugsweise zufällig und sprunghaft variiert.

7. Gitterbild nach wenigstens einem der Ansprüche 1 bis 6, **dadurch gekennzeichnet, dass** das Gitterbild zusätzlich zumindest ein diffraktives Gitterfeld mit einem betrachtungswinkelabhängigen Erscheinungsbild aufweist.

8. Gitterbild nach wenigstens einem der Ansprüche 1 bis 7, **dadurch gekennzeichnet, dass** die Teilbereiche als schmale Streifen mit einer Breite unterhalb der Auflösungsgrenze des Auges ausgebildet sind, oder die Teilbereiche als kleine Flächenelemente beliebiger Form mit einer Größe unterhalb der Auflösungsgrenze des Auges ausgebildet sind.

9. Gitterbild nach Anspruch 8, **dadurch gekennzeichnet, dass** die Streifen eine Breite zwischen 1 $\mu$m und 30 $\mu$m, vorzugsweise zwischen 10 $\mu$m und 25 $\mu$m, und besonders bevorzugt von etwa 20 $\mu$m aufweisen.

10. Gitterbild nach wenigstens einem der Ansprüche 1 bis 9, **dadurch gekennzeichnet, dass** die achromatischen Gitterfelder durch unterschiedliche Belegungsdichten mit Strichgitterlinien ein Halbtonbild mit mehreren Helligkeitsstufen bilden.

11. Gitterbild nach wenigstens einem der Ansprüche 1 bis 10, **dadurch gekennzeichnet, dass** das Gitterbild ein Wechselbild enthält, also ein Bild, das unter unterschiedlichen seitlichen Kippwinkeln unterschiedliche Bilder zeigt, so dass für den Betrachter beim seitlichen Kippen des Gitterbildes ein Wechselbild entsteht, oder das Gitterbild ein Bewegungsbild enthält, also ein Bild, das unter unterschiedlichen seitlichen Kippwinkeln ein Bildmotiv in unterschiedlichen Bewegungszuständen zeigt, so dass für den Betrachter beim seitlichen Kippen des Gitterbildes ein Bewegungsbild entsteht, oder das Gitterbild ein Pumpbild enthält, also ein Bild, das unter unterschiedlichen seitlichen Kippwinkeln eine sich vergrößernde oder verkleinernde Umrisslinie eines Bildmotivs zeigt, so dass für den Betrachter beim seitlichen Kippen des Gitterbildes ein Pumpbild entsteht, oder das Gitterbild ein Stereobild enthält, also ein Bild, das zumindest zwei Ansichten eines Bildmotivs aus unterschiedlichen Betrachtungsrichtungen zeigt und bei dem die seitlichen Kippwinkel der Ansichten auf Grundlage eines vorgewählten Betrachtungsabstands für das Gitterbild so festgesetzt sind, dass für den Betrachter ein Stereobild des Bildmotivs entsteht.

**12.** Verfahren zum Herstellen eines Gitterbilds, bei dem in einem Substrat zwei oder mehr Gitterfelder erzeugt werden, die jeweils mit einem elektromagnetische Strahlung beeinflussenden Gittermuster aus einer Vielzahl von Strichgitterlinien gefüllt werden, wobei die Strichgitterlinien zumindest eines achromatischen Gitterfelds mit charakteristischen Parametern Orientierung, Krümmung, Beabstandung und Profilierung erzeugt werden, wobei zumindest einer dieser Parameter über die Fläche des Gitterfelds zufällig, vorzugsweise zufällig und sprunghaft variiert wird,

    - die Gitterfelder aus ineinander verschachtelten Teilbereichen gebildet werden, deren Ausdehnung in zumindest einer Dimension unterhalb der Auflösungsgrenze des bloßen Auges gewählt wird, **dadurch gekennzeichnet, dass**
    - zumindest ein Gitterfeld als ein achromatisches Gitterfeld mit einem betrachtungswinkelabhängigen visuellen Erscheinungsbild erzeugt wird.

**13.** Verfahren nach Anspruch 12, **dadurch gekennzeichnet, dass** jedes achromatische Gitterfeld mit einer Vorzugsrichtung erzeugt wird, die einen Betrachtungsbereich festlegt, aus dem das achromatische Gitterfeld mit einem matten, vorzugsweise silbrigen Erscheinungsbild visuell erkennbar ist.

**14.** Verfahren nach Anspruch 12 oder 13, **dadurch gekennzeichnet, dass** nur der Parameter Beabstandung der Strichgitterlinien über die Fläche des Gitterfelds zufällig, vorzugsweise zufällig und sprunghaft variiert wird.

**15.** Verfahren nach wenigstens einem der Ansprüche 12 bis 14, **dadurch gekennzeichnet, dass** die Teilbereiche als schmale Streifen mit einer Breite unterhalb der Auflösungsgrenze des Auges erzeugt werden.

**16.** Sicherheitselement mit einem Gitterbild nach wenigstens einem der Ansprüche 1 bis 11.

**17.** Sicherheitselement nach Anspruch 16, **dadurch gekennzeichnet, dass** das Sicherheitselement ein Sicherheitsfaden, ein Etikett oder ein Transferelement ist.

**18.** Sicherheitspapier mit einem Sicherheitselement nach Anspruch 16 oder 17.

**19.** Wertdokument mit einem Gitterbild nach wenigstens einem der Ansprüche 1 bis 11, einem Sicherheitselement nach Anspruch 16 oder 17 oder einem Sicherheitspapier nach Anspruch 18.

**20.** Wertdokument nach Anspruch 19, **dadurch gekennzeichnet, dass** das Wertdokument eine Banknote, ein Pass, eine Banderole, eine Urkunde oder eine Ausweiskarte ist.

**Claims**

**1.** A grating image having two or more grating fields that each include an electromagnetic-radiation-influencing grating pattern composed of a plurality of grating lines, the grating lines of at least one achromatic grating field being **characterized by** the parameters orientation, curvature, spacing and profile, at least one of said parameters varying randomly, preferably randomly and discontinuously, across the area of the grating field,

    - the grating fields being formed from nested sub-regions whose expanse in at least one dimension is below the resolution limit of the naked eye, **characterized in that**
    - at least one grating field is an achromatic grating field having a viewing-angle-dependent visual appearance.

**2.** The grating image according to claim 1, **characterized in that** the grating image comprises two or more achromatic grating fields having a viewing-angle-dependent visual appearance.

**3.** The grating image according to claim 1 or 2, **characterized in that** each achromatic grating field has a preferred direction that establishes a viewing range from which the achromatic grating field is visually perceptible having a matte, preferably silvery appearance.

**4.** The grating image according to claim 3, **characterized in that** the viewing range is given by an angle range of about +/-10°, preferably of about +/- 5°, particularly preferably of about +/-3° about a preferred viewing direction.

**5.** The grating image according to at least one of claims 1 to 4, **characterized in that** the parameter orientation of the grating lines varies randomly, preferably randomly and discontinuously, in an angle range of less than +/-10°, preferably of less than +/- 5°, particularly preferably of less than +/-3°.

6. The grating image according to at least one of claims 1 to 4, **characterized in that** only the parameter spacing of the grating lines varies randomly, preferably randomly and discontinuously, across the area of the grating field.

7. The grating image according to at least one of claims 1 to 6, **characterized in that** the grating image additionally comprises at least one diffractive grating field having a viewing-angle-dependent appearance.

8. The grating image according to at least one of claims 1 to 7, **characterized in that** the sub-regions are developed as narrow strips having a width below the resolution limit of the eye, or the sub-regions are developed as small areal elements of arbitrary shape having a size below the resolution limit of the eye.

9. The grating image according to claim 8, **characterized in that** the strips have a width between 1 $\mu$m and 30 $\mu$m, preferably between 10 $\mu$m and 25 $\mu$m, and particularly preferably of about 20 $\mu$m.

10. The grating image according to at least one of claims 1 to 9, **characterized in that** the achromatic grating fields form, through different loading densities with grating lines, a halftone image having multiple brightness levels.

11. The grating image according to at least one of claims 1 to 10, **characterized in that** the grating image includes an alternating image, that is, an image that, from different lateral tilt angles, displays different images such that, when the grating image is tilted laterally, an alternating image is created for the viewer, or the grating image includes a motion image, that is, an image that, from different lateral tilt angles, displays an image motif in different motion states such that, when the grating image is tilted laterally, a motion image is created for the viewer, or the grating image includes a pump image, that is, an image that, from different lateral tilt angles, displays an enlarging or shrinking contour line of an image motif such that, when the grating image is tilted laterally, a pump image is created for the viewer, or the grating image includes a stereo image, that is, an image that displays at least two views of an image motif from different viewing directions and for which the lateral tilt angles of the views are fixed, based on a prechosen viewing distance for the grating image, in such a way that a stereo image of the image motif is created for the viewer.

12. A method for manufacturing a grating image, in which, in a substrate, two or more grating fields are produced that are each filled with an electromagnetic-radiation-influencing grating pattern composed of a plurality of grating lines, the grating lines of at least one achromatic grating field being produced having characteristic parameters orientation, curvature, spacing and profile, at least one of said parameters being varied randomly, preferably randomly and discontinuously, across the area of the grating field,

    - the grating fields being formed from nested sub-regions whose expanse in at least one dimension is chosen to be below the resolution limit of the naked eye, **characterized in that**
    - at least one grating field is produced as an achromatic grating field having a viewing-angle-dependent visual appearance.

13. The method according to claim 12, **characterized in that** each achromatic grating field is produced having a preferred direction that establishes a viewing range from which the achromatic grating field is visually perceptible having a matte, preferably silvery appearance.

14. The method according to claim 12 or 13, **characterized in that** only the parameter spacing of the grating lines is varied randomly, preferably randomly and discontinuously, across the area of the grating field.

15. The method according to at least one of claims 12 to 14, **characterized in that** the sub-regions are produced as narrow strips having a width below the resolution limit of the eye.

16. A security element having a grating image according to at least one of claims 1 to 11.

17. The security element according to claim 16, **characterized in that** the security element is a security thread, a label or a transfer element.

18. A security paper having a security element according to claim 16 or 17.

**19.** A value document having a grating image according to at least one of claims 1 to 11, a security element according to claim 16 or 17, or a security paper according to claim 18.

**20.** The value document according to claim 19, **characterized in that** the value document is a banknote, a passport, a sleeve, a certificate or an identification card.

**Revendications**

**1.** Image tramée avec deux champs tramés ou plus, qui contiennent chacun un motif tramé influençant un rayonnement électromagnétique constitué d'une pluralité de lignes de traits tramés, les lignes de traits tramés d'au moins un champ tramé achromatique étant **caractérisées par** les paramètres : orientation, courbure, écart et profilage, au moins l'un desdits paramètres variant de manière aléatoire, de préférence de manière aléatoire et inconstante sur la surface du champ tramé,

- les champs tramés étant formés de zones partielles imbriquées les unes dans les autres, dont l'extension dans au moins une dimension se situe en-dessous de la limite de résolution de l'oeil nu, **caractérisée en ce**
- **qu'**au moins un champ tramé est un champ tramé achromatique avec une apparence visuelle dépendant de l'angle d'observation.

**2.** Image tramée selon la revendication 1, **caractérisée en ce que** l'image tramée comporte deux champs tramés achromatiques ou plus, avec une apparence visuelle dépendant de l'angle d'observation.

**3.** Image tramée selon la revendication 1 ou la revendication 2, **caractérisée en ce que** chaque champ tramé achromatique dispose d'une direction préférentielle qui détermine un angle d'observation à partir duquel le champ tramé achromatique est visuellement identifiable avec une apparence mate, de préférence argentée.

**4.** Image tramée selon la revendication 3, **caractérisée en ce que** la zone d'observation est donnée par une plage angulaire d'environ +/- 10°, de préférence d'environ +/- 5°, de manière particulièrement préférée d'environ +/- 3° autour d'une direction d'observation préférentielle.

**5.** Image tramée selon au moins l'une quelconque des revendications 1 à 4, **caractérisée en ce que** le paramètre orientation des lignes de traits tramés varie de manière aléatoire, de préférence de manière aléatoire et inconstante dans une plage angulaire de moins de +/- 10°, de préférence de moins de +/- 5°, de manière particulièrement préférée de moins de +/- 3°.

**6.** Image tramée selon au moins l'une quelconque des revendications 1 à 4, **caractérisée en ce que** seul le paramètre écart entre les lignes de traits tramés varie de manière aléatoire, de préférence de manière aléatoire et inconstante sur la surface du champ tramé.

**7.** Image tramée selon au moins l'une quelconque des revendications 1 à 6, **caractérisée en ce que** l'image tramée comporte en supplément au moins un champ tramé de diffraction avec une apparence dépendant de l'angle d'observation.

**8.** Image tramée selon au moins l'une quelconque des revendications 1 à 7, **caractérisée en ce que** les zones partielles sont conçues en tant que bandes minces d'une largeur inférieure à la limite de résolution de l'oeil ou **en ce que** les zones partielles sont conçues en tant que petites éléments plans de forme quelconque, d'une taille inférieure à la limite de résolution de l'oeil.

**9.** Image tramée selon la revendication 8, **caractérisée en ce que** les bandes présentent une largeur comprise entre 1 $\mu$m et 30 $\mu$m, de préférence entre 10 $\mu$m et 25 $\mu$m et de manière particulièrement préférée d'environ 20 $\mu$m.

**10.** Image tramée selon au moins l'une quelconque des revendications 1 à 9, **caractérisée en ce que** par différentes densités d'occupation par des lignes de traits tramés, les champs tramés achromatiques forment une image en demi-teintes avec plusieurs niveaux de luminosité.

**11.** Image tramée selon au moins l'une quelconque des revendications 1 à 10, **caractérisée en ce que** l'image tramée contient une image changeante, donc une image qui sous différents angles de basculement latéral montre différentes images, de sorte que lors du basculement latéral de l'image tramée, une image changeante apparaisse à l'observateur ou **en ce que** l'image tramée contient un cyclogramme, donc une image qui sous différents angles de basculement latéral montre un motif pictural dans différentes positions de déplacement, de sorte que lors du basculement latéral de l'image tramée, un cyclogramme apparaisse à l'observateur ou **en ce que** l'image tramée contient une image de pompage, c'est-à-dire une image qui sous différents angles de basculement latéral montre une ligne de contour qui s'agrandit ou qui rétrécit d'un motif pictural, de sorte que lors du basculement latéral de l'image tramée, il apparaisse à l'utilisateur une image de pompage ou **en ce que** l'image tramée contient une image en stéréo, donc une image qui montre au moins deux vues d'un motif pictural à partir de différentes directions d'observation et sur laquelle, sur la base d'une distance d'observation présélectionnée pour l'image tramée, les angles de basculement latéral des vues sont déterminés de telle sorte qu'il apparaisse à l'observateur une image en stéréo du motif pictural.

12. Procédé destiné à fabriquer une image tramée, lors duquel on crée dans un substrat deux ou plusieurs champs tramés, que l'on remplit chacun d'un motif tramé influençant un rayonnement électromagnétique, constitué d'une pluralité de lignes de traits tramés, les lignes de traits tramés d'au moins un champ tramé achromatique étant créées avec des paramètres caractéristiques : orientation, courbure, écart et profilage, sachant qu'on fait varier au moins l'un desdits paramètres de manière aléatoire, de préférence de manière aléatoire et inconstante sur la surface du champ tramé,

- on forme les champs tramés de zones partielles imbriquées les unes dans les autres, dont on choisit l'extension dans au moins une dimension en-dessous de la limite de résolution de l'oeil nu **caractérisé en ce**
- **qu'**on crée au moins un champ tramé en tant qu'un champ tramé achromatique avec une apparence visuelle dépendant de l'angle d'observation.

13. Procédé selon la revendication 12, **caractérisé en ce qu'**on créé chaque champ tramé achromatique avec une direction préférentielle qui détermine une zone d'observation à partir de laquelle le champ tramé achromatique est visuellement identifiable avec une apparence mate, de préférence argentée.

14. Procédé selon la revendication 12 ou la revendication 13, **caractérisé en ce qu'**on ne fait varier que le paramètre écart entre les lignes de traits tramés de manière aléatoire, de préférence de manière aléatoire et inconstante sur la surface du champ tramé.

15. Procédé selon au moins l'une quelconque des revendications 12 à 14, **caractérisé en ce qu'**on créé les zones partielles en tant que bandes minces d'une largeur inférieure à la limite de résolution de l'oeil.

16. Élément de sécurité avec une image tramée selon au moins l'une quelconque des revendications 1 à 11.

17. Élément de sécurité selon la revendication 16, **caractérisé en ce que** l'élément de sécurité est un fil de sécurité, une étiquette ou un élément de transfert.

18. Papier sécurisé avec un élément de sécurité selon la revendication 16 ou la revendication 17.

19. Document de valeur avec une image tramée selon au moins l'une quelconque des revendications 1 à 11, un élément de sécurité selon la revendication 16 ou la revendication 17 ou un papier sécurisé selon la revendication 18.

20. Document de valeur selon la revendication 19, **caractérisé en ce que** le document de valeur est un billet de banque, un passeport, une banderole, un acte ou une carte d'identité.

Fig. 1

Fig. 2

Fig. 3a

Fig. 3b

Fig. 3c

Fig. 3d

Fig. 4a

Fig.4b

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005071444 A2
- DE 10348619 A1